(19) Europäisches Patentamt
European Patent Office
Office européen des brevets

(11) Veröffentlichungsnummer : **0 432 445 B1**

(12) **EUROPÄISCHE PATENTSCHRIFT**

(45) Veröffentlichungstag der Patentschrift : **02.06.93 Patentblatt 93/22**

(51) Int. Cl.$^5$ : **C09D 11/02,** C09B 3/14, C09B 5/62

(21) Anmeldenummer : **90121173.0**

(22) Anmeldetag : **06.11.90**

(54) **Fluoreszierende Druckfarben.**

(30) Priorität : **16.11.89 DE 3938091**

(43) Veröffentlichungstag der Anmeldung : **19.06.91 Patentblatt 91/25**

(45) Bekanntmachung des Hinweises auf die Patenterteilung : **02.06.93 Patentblatt 93/22**

(84) Benannte Vertragsstaaten : **CH DE FR GB IT LI**

(56) Entgegenhaltungen :
**EP-A- 0 042 819**
**EP-A- 0 422 474**
**DE-B- 1 272 270**

(73) Patentinhaber : **BASF Lacke + Farben AG**
**Glasuritstrasse 1**
**W-4400 Münster (DE)**

(72) Erfinder : **Stark, Erwin, Dr.**
**Hohenackerweg 7**
**W-7325 Bad Boll (DE)**
Erfinder : **Bredereck, Peter, Dr.**
**Gaussstrasse 2 a**
**W-7000 Stuttgart 1 (DE)**
Erfinder : **Lawrenz, Dirk, Dr.**
**Moerikestrasse 3**
**W-7257 Ditzingen 4 (DE)**
Erfinder : **Kock, Hans-Jakob, Dr.**
**Antonia-Viscanti-Strasse 21**
**W-7120 Bietigheim-Bissingen (DE)**

(74) Vertreter : **Karau, Wolfgang, Dr. et al**
**BASF Aktiengesellschaft Carl-Bosch-Strasse 38**
**W-6700 Ludwigshafen (DE)**

EP 0 432 445 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue fluoreszierende Druckfarben, enthaltend Fluoreszenzpigmente, deren mittlere Teilchengröße 2 bis 20 µm beträgt und die unpolare Polymermatrices, ausgewählt aus der Gruppe, bestehend aus Polymethylmethacrylat, Polystyrol, mit Polybutadien modifiziertem Polystyrol, Polycarbonat, Polyvinylchlorid und Polyamid, aufweisen und einen oder mehrere unpolare Fluoreszenzfarbstoffe aus der Perylenreihe enthalten.

Fluoreszierende Druckfarben werden seit langem in vielen Bereichen eingesetzt. Die Spannweite reicht vom Verpackungsdruck, wo besonders kräftige und effektvolle Farben erwünscht sind, bis hin zum Wertpapierdruck, wo für den normalen Betrachter meist nicht sichtbare Fluoreszenzeffekte der Druckfarben die Fälschungssicherheit erhöhen.

Ein gravierender Nachteil der bisher zur Anwendung kommenden fluoreszierenden Druckfarben ist ihre mangelnde Chemikalien- und Lichtechtheit. Besonders die mangelnde Lichtechtheit führt zu starken Einschränkungen bei der Verwendung derartiger Farben, da, je nach Intensität der Beleuchtung, schon nach Tagen oder Wochen die Farben verblassen. Die bisher verwendeten Druckfarben erreichen daher in der Regel nur eine Lichtechtheit, die etwa der Stufe 3 der internationalen Wollskala (DIN 16 525) entspricht.

Es bestand daher die Aufgabe, Druckfarben zu entwickeln, die die beschriebenen Nachteile nicht aufweisen und eine wesentlich bessere Chemikalien- und Lichtechtheit besitzen.

Demgemäß wurden die eingangs näher bezeichneten fluoreszierenden Druckfarben gefunden.

Geeignete unpolare Perylenfarbstoffe sind beispielsweise solche, wie sie in der US-A-4 618 694, DE-A-2 451 782, US-A-4 379 934, US-A-4 446 324 oder EP-A-227 980 beschrieben sind.

Weiterhin geeignete unpolare Perylenfarbstoffe sind beispielsweise solche, wie sie in der EP-A-73 007 beschrieben sind.

Hervorzuheben sind fluoreszierende Druckfarben, enthaltend Fluoreszenzpigmente, die Perylenfarbstoffe der Formel V

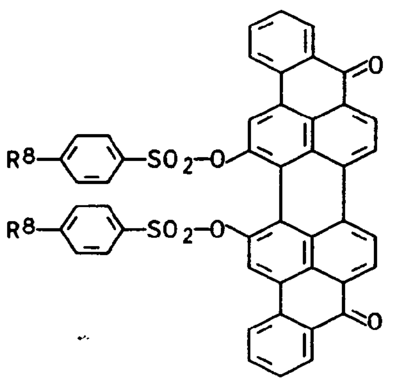

(V)

enthalten, worin $R^8$ $C_1$-$C_{13}$-Alkyl bedeutet.

Besonders bevorzugt sind fluoreszierende Druckfarben, enthaltend Fluoreszenzpigmente, die Perylenfarbstoffe der Formel I

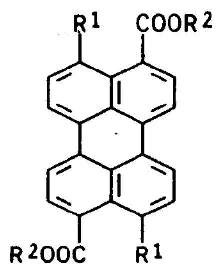

(I)

enthalten, worin

$R^1$ Wasserstoff oder Cyano und

$R^2$ $C_1$-$C_{11}$-Alkyl bedeuten.

Weiterhin besonders bevorzugt sind fluoreszierende Druckfarben, enthaltend Fluoreszenzpigmente, die

Perylenfarbstoffe der Formel II

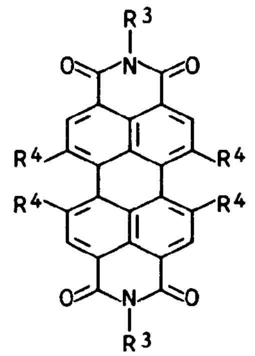

(II)

enthalten, wobei

$R^3$ $C_5$-$C_{20}$-Alkyl, das gegebenenfalls durch ein Sauerstoffatom unterbrochen ist, oder Phenyl, das durch $C_1$-$C_{13}$-Alkyl oder $C_1$-$C_{13}$-Alkoxy ein- oder mehrfach substituiert ist, und

$R^4$ Wasserstoff, Chlor, Phenoxy oder durch Halogen, $C_1$-$C_4$-Alkyl oder $C_1$-$C_4$-Alkoxy substituiertes Phenoxy bedeuten.

Insbesondere bevorzugt sind fluoreszierende Druckfarben, enthaltend Fluoreszenzpigmente, die Farbstoffe der Formel II enthalten, worin $R^3$ durch $C_1$-$C_4$-Alkyl oder $C_1$-$C_4$-Alkoxy ein- oder mehrfach substituiertes Phenyl und $R^4$ Wasserstoff, Phenoxy oder Chlor bedeuten.

Ganz besonders hervorzuheben sind fluoreszierende Druckfarben, enthaltend Fluoreszenzpigmente, die einen Farbstoff der Formel I enthalten, worin $R^1$ jeweils Cyano und $R^2$ jeweils Butyl bedeuten.

Weiterhin ganz besonders hervorzuheben sind fluoreszierende Druckfarben, enthaltend Fluoreszenzpigmente, die einen Farbstoff der Formel II enthalten, worin $R^3$ 2,6-Diisopropylphenyl und $R^4$ Phenoxy bedeuten.

Geeignete Reste $R^2$, $R^5$, $R^6$, $R^7$ und $R^8$ sind z.B. Methyl, Ethyl, Propyl, Isopropyl, Butyl, Isobutyl oder sec-Butyl.

Reste $R^2$, $R^7$ und $R^8$ sind weiterhin, wie auch Reste $R^3$, z.B. Pentyl, Isopentyl, Neopentyl, tert-Pentyl, Hexyl, 2-Methylpentyl, Heptyl, 1-Ethylpentyl, Octyl, 2-Ethylhexyl, Isooctyl, Nonyl, Isononyl, Decyl, Isodecyl oder Undecyl.

Reste $R^3$ und $R^8$ sind weiterhin z.B. Dodecyl, Tridecyl oder Isotridecyl.

Reste $R^3$ sind weiterhin z.B. Tetradecyl, Pentadecyl, Hexadecyl, Heptadecyl, Octadecyl, Nonadecyl, Eicosyl (Die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436.), 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Isopropoxypropyl, 2- oder 3-Butoxypropyl, 2- oder 3-(2-Ethylhexyloxy)propyl, 2- oder 4-Methoxybutyl, 2- oder 4-Ethoxybutyl, 2- oder 4-Propoxybutyl, 2- oder 4-Isopropoxybutyl, 2- oder 4-Butoxybutyl, 2- oder 4-(2-Ethylhexyloxy)butyl, 2-Methyl-6-isopropylphenyl, 2-Methyl-6-sec-butylphenyl, 2-Methyl-6-tert-butylphenyl, 2-Ethyl-6-isopropylphenyl, 2-Ethyl-6-sec-butylphenyl, 2-Ethyl-6-tert-butylphenyl, 2-Methylphenyl, 2,3-, 2,4-, 2,5- oder 2,6-Dimethylphenyl, 2,4,6-Trimethylphenyl, 2-Methyl-4-methoxyphenyl, 2,5-Dimethyl-4-methoxyphenyl, 2-Ethylphenyl, 2,6-Diethylphenyl, 2,6-Diethyl-4-methylphenyl, 2-Isopropylphenyl, 2,4-, 2,5- oder 2,6-Diisopropylphenyl, 2-n-Butylphenyl, 2-sec-Butylphenyl, 2-n-Pentylphenyl, 2-n-Hexylphenyl, 2-(2'-Methylpentyl)phenyl, 2-n-Octylphenyl, 2-Methoxyphenyl, 2-Ethoxyphenyl, 2,5-Dimethoxyphenyl, 2,5-Diethoxyphenyl, 2,4-Dimethoxyphenyl, 2,4-Diethoxyphenyl, 2,3-Dimethoxyphenyl oder 2,3-Diethoxyphenyl.

Reste $R^4$ sind z.B. 2-, 3- oder 4-Fluorphenoxy, 2-, 3- oder 4-Chlorphenoxy, 2-, 3- oder 4-Bromphenoxy, 2-, 3- oder 4-tert-Butylphenoxy, 2-Isopropyl-4-methylphenoxy, 2,3-, 2,4-, 2,5- oder 2,6-Dichlorphenoxy, 2,4,5- oder 2,4,6-Trichlorphenoxy, 2-, 3- oder 4-Methylphenoxy, 2,3-, 2,4-, 2,5-, 2,6- oder 3,5-Dimethylphenoxy, 2,5,6-Trimethylphenoxy, 2-Methyl-4-chlorphenoxy, 2-Methyl-5-chlorphenoxy, 2-Methyl-6-chlorphenoxy, 2-Ethylphenoxy, 2,6-Diethylphenoxy, 2,6-Diethyl-4-methylphenoxy, 2-Isopropylphenoxy, 3-Methyl-4-chlorphenyl, 4-Propylphenoxy, 4-Butylphenoxy, 2-, 3- oder 4-Methoxyphenoxy, 2-, 3- oder 4-Ethoxyphenoxy, 2-, 3- oder 4-Propoxyphenoxy, 2-, 3- oder 4-Isopropoxyphenoxy, 2-, 3- oder 4-Butoxyphenoxy oder 2, 4-Dimethoxyphenoxy.

Die Fluoreszenzpigmente weisen unpolare Polymermatrices, ausgewählt aus der Gruppe, bestehend aus Polymethylmethacrylat, Polystyrol, mit Polybutadien modifiziertem Polystyrol, Polycarbonat, Polyvinylchlorid und Polyamid, auf.

Bevorzugt sind dabei solche fluoreszierende Druckfarben, die Fluoreszenzpigmente enthalten, die Polymermatrices aus Polymethylmethacrylat oder Polystyrol aufweisen.

Die genannten Polymermatrices sind an sich bekannt und handelsüblich.

Der Gehalt an Fluoreszenzfarbstoff in den Fluoreszenzpigmenten liegt im allgemeinen bei 0,01 bis 10 Gew.-%, vorzugsweise 0,5 bis 5 Gew.-% und insbesondere 1 bis 3 Gew.%, jeweils bezogen auf die Polymermatrix.

Die genannten Fluoreszenzfarbstoffe können dabei jeweils für sich oder auch als Mischungen untereinander in den Fluoreszenzpigmenten enthalten sein. Ebenso können die Fluoreszenzpigmente nur eine der genannten Polymermatrices oder auch deren Mischungen untereinander aufweisen.

Die in den neuen Druckfarben enthaltenen Fluoreszenzpigmente weisen eine mittlere Teilchengröße von 2 bis 20 μm, vorzugsweise 5 bis 15 μm auf.

Die Herstellung der Fluoreszenzpigmente kann z.B. nach der in der älteren deutschen Patentanmeldung P 39 33 903.3 beschriebenen Methode erfolgen.

Neben den Fluoreszenzpigmenten weisen die erfindungsgemäßen fluoreszierenden Druckfarben in der Regel weitere an sich bekannte Bestandteile, wie Bindemittel, Füllstoffe, Siccative, Weichmacher oder Lösungsmittel, auf. Weiterhin können z.B. folgende Additive enthalten sein: weitere Farbpigmente, Lösevermittler, Wachse, Stabilisatoren, Verdickungsmittel, Emulgatoren, Entschäumer oder Stärke.

Geeignete Bindemittel sind z.B. Firnisse, beispielsweise auf Basis von Leinöl oder Holzöl, Alkydharze, modifizierte Kolophoniumharze, Nitrocellulose, Polyamidharze, Maleinatharze, Schellack, Vinylharze, Phenolharze, Urethanharze, Urethanalkyde, Epoxidharze, Novolake, Kohlenwasserstoffharze, Cellulosederivate, Acrylate, Acrylatcopolymere oder deren Mischungen.

Geeignete Füllstoffe sind z.B. Kreide, Aluminiumsilikat, Talkum, Gips, Bariumsulfat oder Magnesiumoxid.

Geeignete Siccative sind z.B. Metallseifen (beispielsweise Naphthenate oder Octoate) der Metalle Kobalt, Mangan, Cer, Zirkonium, Blei, Calcium, Barium oder Zink.

Geeignete Weichmacher sind z.B. Phthalsäureester, Adipinsäureester, Polyglykole oder Zitronensäureester.

Geeignete Lösungsmittel sind z.B. Mineralöle, pflanzliche Öle, Glykole, Glykolether, Alkohole, Ester, Ketone oder auch Wasser.

Bevorzugt sind Druckfarben, die modifizierte Kolophoniumharze, Alkydharze, Phenolharze oder Urethanalkyde als Bindemittel enthalten.

Der Anteil an Fluoreszenzpigment in den neuen Druckfarben beträgt in der Regel 1 bis 80 Gew.-%, vorzugsweise 5 bis 60 Gew.-% und insbesondere 10 bis 40 Gew.-%, jeweils bezogen auf das Gewicht der Druckfarbe.

Der Anteil an Bindemittel in den neuen Druckfarben beträgt in der Regel 5 bis 50 Gew.-%, vorzugsweise 10 bis 40 Gew.-%, jeweils bezogen auf das Gewicht der Druckfarbe.

Der Anteil an Füllstoffen in den neuen Druckfarben beträgt üblicherweise 10 bis 75 Gew.-%, vorzugsweise 20 bis 40 Gew.-%, jeweils bezogen auf das Gewicht der Druckfarbe.

Der Anteil an Lösungsmittel in den neuen Druckfarben beträgt üblicherweise 5 bis 60 Gew.-%, vorzugsweise 10 bis 50 Gew.-%, jeweils bezogen auf das Gewicht der Druckfarbe.

Der Anteil der anderen oben aufgeführten Hilfsmittel liegt im allgemeinen bei 0 bis 15 Gew.-%, vorzugsweise 0 bis 10 Gew.-%, jeweils bezogen auf das Gewicht der Druckfarbe.

In den erfindungsgemäßen Druckfarben können entweder ein einziges Fluoreszenzpigment oder auch Mischungen verschiedener Fluoreszenzpigmente vorhanden sein, wobei sich die Pigmente sowohl hinsichtlich der Polymermatrix als auch der Fluoreszenzfarbstoffe unterscheiden können.

Die neuen Druckfarben werden zweckmäßig so hergestellt, daß die einzelnen Komponenten mittels eines wirkungsvollen Rührers innig vermischt werden. Danach schließen sich vorteilhaft ein oder mehrere Reibgänge auf einer Dreiwalze an. Gegebenenfalls kann auch ein Vakuummischer verwendet werden.

Die erfindungsgemäßen Druckfarben eignen sich in vorteilhafter Weise zum Bedrucken von Papier, Kunststoffolien, Textilien oder Blechen.

Die resultierenden Drucke weisen eine hohe Lichtechtheit sowie Chemikalienechtheit auf.

Die folgenden Beispiele sollen die Erfindung näher erläutern.

Allgemeine Herstellvorschrift für eine Druckfarbe

200 g Fluoreszenzpigment, 350 g Füllstoff (Kreide), 200 g Alkydharz, 230 g kolophoniummodifiziertes Phenolharz (50gew.-%ig in Mineralöl) und 20 g Siccativ (Manganoctoat, 12gew.-%ig in Mineralöl) werden auf einer Dreiwalze vermischt. Zur Erzielung einer homogenen Mischung werden jeweils drei Durchgänge vorgenommen.

Dabei wurden folgende Fluoreszenzpigmente verwendet.

Beispiel 1

3,9-Bis(isobutoxycarbonyl)-4,10-dicyanoperylen in Polymethylmethacrylat (PMMA)
- Gehalt an Fluoreszenzfarbstoff: 2 Gew.-%

Beispiel 2

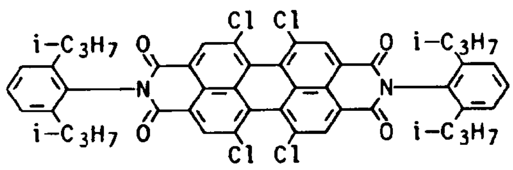

in PMMA
- Gehalt an Fluoreszenzfarbstoff: 5 Gew.-%

Beispiel 3

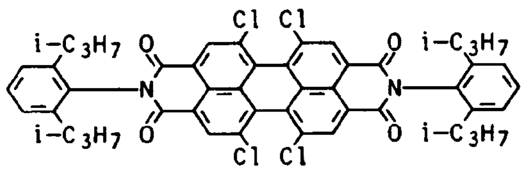

in Polyvinylchlorid
- Gehalt an Fluoreszenzfarbstoff: 5 Gew.-%

Beispiel 4

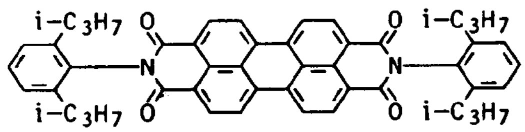

in PPMA
- Gehalt an Fluoreszenzfarbstoff: 5 Gew.-%

Mit den genannten Farben wurden auf einem Prüfbau Probedruckgerät (Fa. Dr. Ing. Dürner, 8123 Peissenberg) auf Papier gewogene Andrucke mit 8 g pro $m^2$ angefertigt. Nach einer Woche Trockenzeit wurde die Lichtechtheit nach DIN 16 525 sowie die Beständigkeit gegen die im folgenden angegebenen Prüfmedien getestet.

| Beispiel Nr. | Lichtechtheit |
|---|---|
| 1 | > 6 |
| 2 | > 6 |
| 3 | > 4 |
| 4 | > 6 |

Die im folgenden aufgeführten Ergebnisse beziehen sich jeweils auf die Beispiele 1 bis 4.

Chemikalienechtheit

| Behandlung mit: | Veränderung: |
|---|---|
| 20 gew.-%iger Essigsäure 25°C, 30 min | keine |
| 5 gew.-%iger Salzsäure 25°C, 30 min | keine |
| 2 gew.-%iger Schwefelsäure 25°C, 30 min | keine |
| 20 gew.-%iger Natriumhypochloritlösung 25°C, 20 min | keine |
| 2 gew.-%iger Natriumhydroxidlösung 25°C, 30 min | keine |
| gesättigter Natriumsulfidlösung 25°C, 30 min | keine |
| 10 gew.-%iger Kernseifenlösung (pH 10,3) 80°C, 30 min | keine |
| 1 gew.-%iger bioaktiver Waschmittellösung 20°C, 180 min | leichte Aufhellung |
| industrieller Waschlösung 90°C, 20 min | leichte Aufhellung |

## Patentansprüche

1. Fluoreszierende Druckfarben, enthaltend Fluoreszenzpigmente, deren mittlere Teilchengröße 2 bis 20 µm beträgt und die unpolare Polymermatrices, ausgewählt aus der Gruppe, bestehend aus Polymethylmethacrylat, Polystyrol, mit Polybutadien modifiziertem Polystyrol, Polycarbonat, Polyvinylchlorid und Polyamid, aufweisen und einen oder mehrere unpolare Fluoreszenzfarbstoffe aus der Perylenreihe enthalten.

2. Fluoreszierende Druckfarben nach Anspruch 1, dadurch gekennzeichnet, daß die Fluoreszenzpigmente einen Farbstoff der Formel I

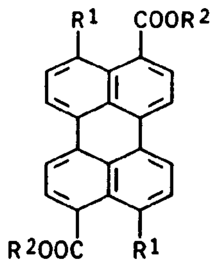

(I)

enthalten, worin

$R^1$ Wasserstoff oder Cyano und

$R^2$ $C_1$-$C_{11}$-Alkyl bedeuten.

3. Fluoreszierende Druckfarben nach Anspruch 1, dadurch gekennzeichnet, daß die Fluoreszenzpigmente einen Farbstoff der Formel II

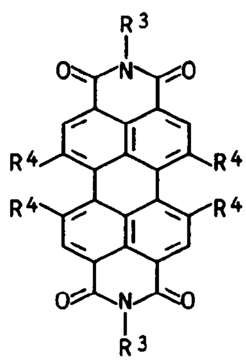

(II)

enthalten, worin

$R^3$ $C_5$-$C_{20}$-Alkyl, das gegebenenfalls durch ein Sauerstoffatom unterbrochen ist, oder Phenyl, das durch $C_1$-$C_{13}$-Alkyl oder $C_1$-$C_{13}$-Alkoxy ein- oder mehrfach substituiert ist, und

$R^4$ Wasserstoff, Chlor, Phenoxy oder durch Halogen, $C_1$-$C_4$-Alkyl oder $C_1$-$C_4$-Alkoxy substituiertes Phenoxy bedeuten.

## Claims

1. A fluorescent printing ink containing a fluorescent pigment whose average particle size is from 2 to 20 µm and which has an apolar polymer matrix selected from the group consisting of polymethyl methacrylate, polystyrene, polybutadiene-modified polystyrene, polycarbonate, polyvinyl chloride and polyamide and contains one or more apolar fluorescent dyes of the perylene series.

2. A fluorescent printing ink as claimed in claim 1, wherein the fluorescent pigment contains a dye of the formula I

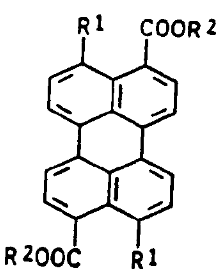

(I)

where $R^1$ is hydrogen or cyano and $R^2$ is $C_1$-$C_{11}$-alkyl.

3. A fluorescent printing ink as claimed in claim 1, wherein the fluorescent pigment contains a dye of the formula II

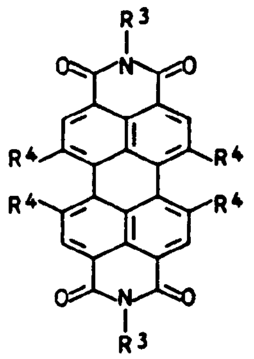

(II)

where

$R^3$ is $C_5$-$C_{20}$-alkyl, which may be interrupted by an oxygen atom, or phenyl which is monosubstituted or polysubstituted by $C_1$-$C_{13}$-alkyl or $C_1$-$C_{13}$-alkoxy, and

$R^4$ is hydrogen, chlorine, phenoxy or halogen-, $C_1$-$C_4$-alkyl- or $C_1$-$C_4$-alkoxy-substituted phenoxy.

## Revendications

1. Encres d'imprimerie fluorescentes, contenant des pigments fluorescents dont la grosseur moyenne de particules est comprise entre 2 et 20 µm, qui comportent des matrices polymères non polaires choisies dans le groupe constitué par le polyméthacrylate de méthyle, le polystyrène, le polystyrène modifié par du polybutadiène, le polycarbonate, le poly(chlorure de vinyle) et le polyamide, et qui contiennent un ou plusieurs colorants fluorescents non polaires de la série du pérylène.

2. Encres d'imprimerie fluorescentes selon la revendication 1, caractérisées en ce que les pigments fluorescents contiennent un colorant de formule (I)

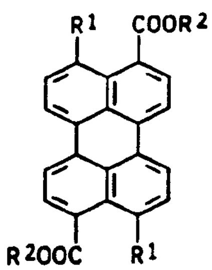

(I)

dans laquelle

$R^1$ représente un atome d'hydrogène ou un radical cyano,

$R^2$ représente un reste alkyle en $C_1$-$C_{11}$.

3. Encres d'imprimerie fluorescentes selon la revendication 1, caractérisées en ce que les pigments fluorescents contiennent un colorant de formule (II)

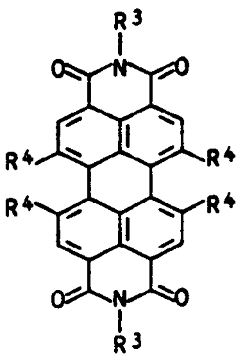

(II)

dans laquelle

$R^3$ représente un reste alkyle en $C_5$-$C_{20}$, qui est éventuellement interrompu par un atome d'oxygène, ou un reste phényle qui est substitué une ou plusieurs fois par des restes alkyle en $C_1$-$C_{13}$ ou alcoxy en $C_1$-$C_{13}$, et

$R^4$ représente un atome d'hydrogène, de chlore ou un reste phénoxy ou phénoxy substitué par un atome d'halogène ou par un reste alkyle en $C_1$-$C_4$ ou alcoxy en $C_1$ -$C_4$.